# EUROPEAN PATENT SPECIFICATION

(11) **EP 3 121 416 B1**
(45) Date of publication and mention of the grant of the patent: **12.09.2018**
(21) Application number: 16180459.6
(22) Date of filing: 20.07.2016
(51) Int. Cl.: F02C 7/055

(54) **AIRCRAFT ENGINE COMPRISING AN INTAKE PIPE PROVIDED WITH AN AIR FILTER AND AN AIR FILTER BYPASS OPENING**
FLUGZEUGTRIEBWERK MIT EINEM ANSAUGROHR MIT EINEM LUFTFILTER UND EINER LUFTFILTER-BYPASSÖFFNUNG
MOTEUR D'AÉRONEF COMPORTANT UN CONDUIT D'ADMISSION ÉQUIPÉ D'UN FILTRE À AIR ET UNE OUVERTURE DE DÉRIVATION DE FILTRE À AIR

(30) Priority: 20.07.2015 IT UB20152299
(43) Date of publication of application: 25.01.2017
(73) Proprietor: BMC S.R.L., 40059 Medicina (IT)
(72) Inventor: BERGAMI, Gaetano, 40059 Medicina (IT)
(74) Representative: Maccagnan, Matteo

(56) References cited:
- GB-A- 1 201 096
- US-A1- 2013 092 798

## Description

### TECHNICAL FIELD

The invention relates to an engine of an aircraft, namely a machine built by mankind, which can stand and move in the air enabling the transportation of people or objects in the Earth's atmosphere.

The invention finds advantageous application in a helicopter, to which explicit reference will be made in the description below without because of this loosing in generality.

### PRIOR ART

A modern helicopter is generally provided with at least one turbine engine, which operates a complex of blades, which allow the helicopter to lift and lower itself in a vertical direction, stand still while flying, move to the side, forward and backward. The turbine engine has, at the front, an air intake, through which the turbine engine sucks in the external air needed to operate (namely, the external air containing the oxygen needed for the combustion).

Generally speaking, the air intake can comprise a metal grid with relatively large meshes (in the range of one or two centimetres), which fulfils the function of preventing birds from flying into the air intake. More rarely, between the air intake and the turbine engine there is arranged an air filter having the function of filtering the air taken in, so as to hold back small-sized impurities (dust or the like), which, in the long term, can cause an early wear of the turbine engine. The use of the air filter is generally avoided, as the air filter causes load losses, which have a significant negative impact on the performances of the turbine engine, and has proven to be useful only close the ground; as a matter of fact, impurities tend to move downwards due to gravity and, therefore, they can be present in the air only in proximity to the ground, whereas at certain heights (i.e. beyond 50-70 metres from the ground) the air is completely free from impurities. As a consequence, the air filter is mounted only when the helicopter must operate (especially take off or land) in areas with a lot of dust, for example in desert areas.

However, the absence of the filter has proven to generally determine higher maintenance costs for the engine, due to the greater wear provoked by the presence of foreign bodies in the combustion chamber during take-off and landing (namely when the helicopter is close to the ground) . As a matter of fact, even when the helicopter takes off and lands in heliports (with asphalt surfaces or the like), air currents generated by the rotation of the blades inevitably lift and spread around impurities (basically dust and small debris), which are always present in the external environment.

Patent application GB1201096A describes an aircraft engine provided with a tubular housing for the intake of the air needed for the operation of the engine; the tubular housing has a plurality of lateral openings (i.e. obtained in the area of a lateral wall of the tubular housing), which are normally closed by panels of filtering material. At least one of the panels of filtering material is movable (by means of a linear sliding or by means of a rotation), so as to set free, when needed, the corresponding intake opening, namely so as to allow, when needed, air to freely flow into the housing without having to flow through the filtering material. However, the aircraft described in patent application GB1201096A is affected by some drawbacks, as the movement of the movable filtering panels requires a complicated mechanism, which is large and heavy.

Patent application US2013092798A1 describes an aircraft engine having a tubular housing provided with an air intake opening, through which the engine takes in the external air needed to operate; inside the tubular housing there is arranged a cylindrical air filter, which is provided, at the front, with at least one deflecting element with a rounded shape, which is axially movable so as to move between a closed position, in which the deflecting element is in contact with the cylindrical air filter, and an open position, in which the deflecting element is moved away from the cylindrical air filter, so as to define a bypass opening, through which the air can get in without having to flow through the filtering material. However, the aircraft described in patent application US2013092798A1 is affected by some drawbacks, as the movement of the deflecting element requires a complicated mechanism, which is large and heavy, and the bypass opening that can be generated by the axial movement of the deflecting element has a relatively small air passageway section.

### DESCRIPTION OF THE INVENTION

The object of the invention is to provide an aircraft engine, which allows the aircraft to safely operate even in areas with a lot of dust, without causing, at the same time, a reduction of the performances.

According to the invention, there is provided an engine aircraft according to the appended claims.

### BRIEF DESCRIPTION OF THE DRAWINGS

The invention will now be described with reference to the accompanying drawings, which show a non-limiting embodiment thereof, wherein:
- figures 1, 2 and 3 are schematic views, namely a side, a front and a top view, respectively, of a helicopter provided with a pair of twin turbine engines according to the invention;
- figure 4 is a schematic view, with a longitudinal section, of part of a turbine engine of the helicopter of figure 1, said turbine engine comprising an intake pipe provided with an air filter;
- figure 5 is a schematic front view of a separation wall of the intake pipe of figure 4;
- figure 6 is a schematic front view of a movable shutter element of the intake pipe of figure 4; and
- figure 7 is a schematic view, with a longitudinal section, of a variant of the air filter of figure 4.

### PREFERRED EMBODIMENTS OF THE INVENTION

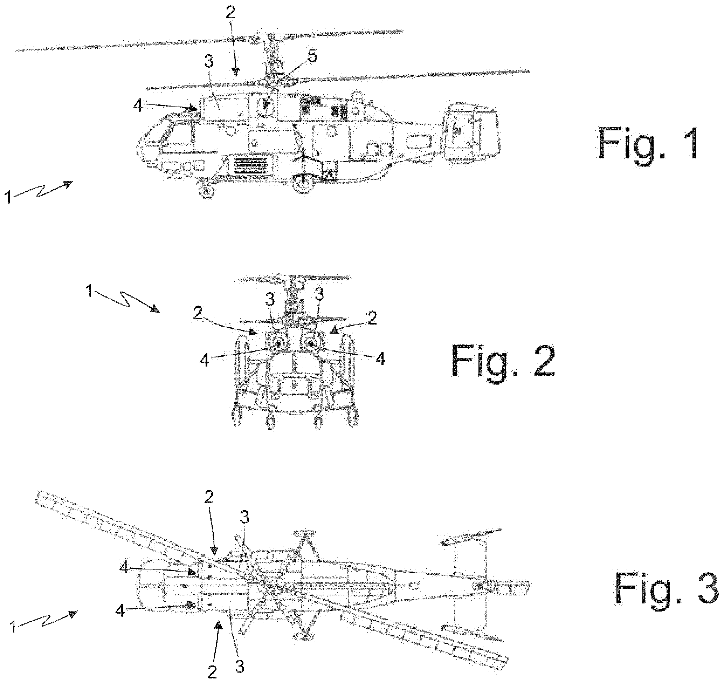

In figures 1, 2 and 3, number 1 indicates, as a whole, a helicopter comprising two twin turbine engines 2, which operate a complex of blades, which allow the helicopter to lift and lower itself in a vertical direction, stand still while flying, move to the side, forward and backward.

Each turbine engine 2 comprises a tubular housing 3 having, at the front, an air intake opening 4 (through which the turbine engine 2 takes in the external air needed to operate, i.e. the external air containing the oxygen needed for the combustion) and, at the back, an air outlet opening 5 (through which the turbine engine 2 expels the exhaust gases produced by the combustion). In other words, each tubular housing 3 has a tubular lateral wall without openings and one single air intake opening 4, which is arranged at the front in the area of a front base perpendicular to the lateral wall and through which the engine 2 takes in the external air needed to operate. In the area of the intake opening 4 there can be arranged a metal grid with relatively large meshes (in the range of one or two centimetres), which fulfils the function of preventing birds from flying into the air intake.

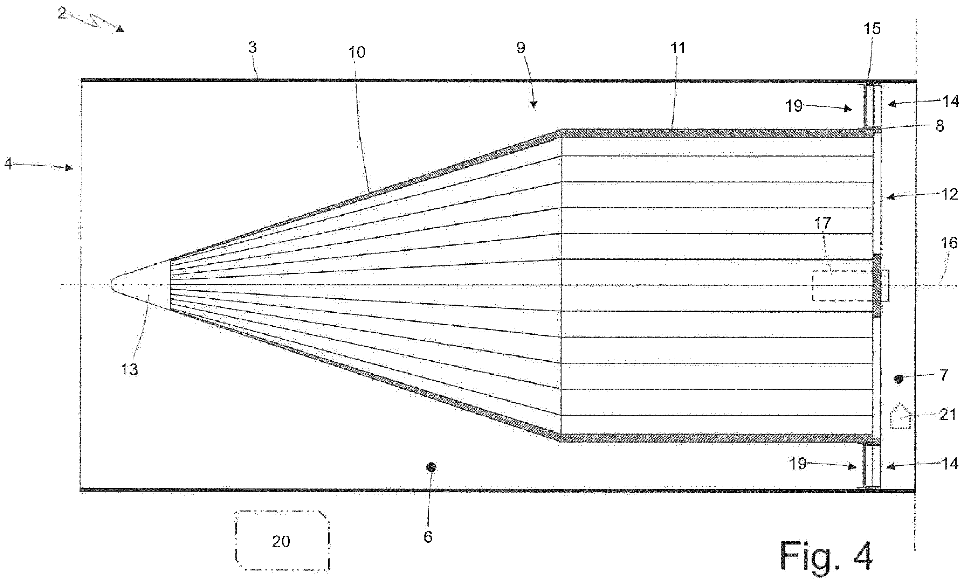

According to figure 4, the tubular housing 3 of each turbine engine 2 has a front intake chamber 6 and a rear propulsion chamber 7, which are divided from one another by a separation wall 8 with an annular shape; in other words, the separation wall 8 is completely arranged inside the tubular housing 3 in the area of an intermediate portion of the tubular housing 3 itself, is oriented perpendicularly to the lateral wall of the tubular housing 3, and divides the inside of the tubular housing 3 into a front intake chamber 6 containing the air filter 9 and a rear propulsion chamber 7. The intake chamber 6 houses an air filter 9 with a tubular shape having a cylindrical symmetry, which has a front filtering element 10 with the shape of a truncated cone and a rear filtering element 11 with a cylindrical shape; in both filtering elements 10 and 11, the filtering material is arranged in the area of the lateral wall. The air filter 9 is narrower than the tubular housing 3 (i.e. it has a smaller diameter than the diameter of the tubular housing 3), so that a lateral wall of the air filter 9 is at a given distance - other than zero - from the lateral wall of the tubular housing 3 (i.e. an empty space with an annular shape is delimited between the lateral wall of the air filter 9 and the lateral wall of the tubular housing 3). The air filter 9 comprises a support frame with a cylindrical shape (made of aluminium, a plastic material or a composite material), which supports different panels of filtering material (for example made of fabric or nonwoven fabric of cotton or other fibres, enclosed between two layers of a thin metal net, which give shape and resistance to the filtering material).

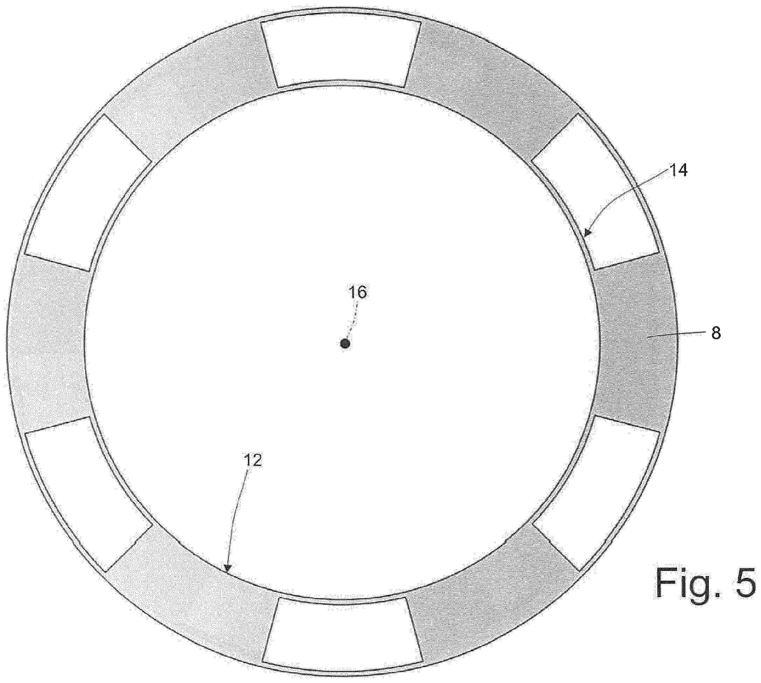

A front base wall of the air filter 9 facing the intake opening 4 is closed, whereas a rear base wall of the air filter 9 facing the propulsion chamber 7 and arranged in contact with the separation wall 8 is centrally perforated in the area of a central passageway through opening, which has a circular shape and is obtained through the separation wall 8 (as you can see in figure 5). The air flowing into the intake chamber 6 of the tubular housing 3 flows through the filtering material of the air filter 9 and then, from the inside of the air filter 9, it flows into the propulsion chamber 7 flowing through the central passageway opening 12; the propulsion chamber 7 houses a turbine of the engine turbine 2, which uses the air present in the propulsion chamber 7 to generate torque by means of fuel combustion. In other words, the separation wall 8 provides a support for a base of the air filter 9 and has the passageway through opening 12, which establishes a pneumatic communication on the inside of the air filter 9 with the rear propulsion chamber 7.

In front of the air filter 9 there is arranged a deflecting element 13 with a conical shape, which is completely housed inside the tubular housing 3, rests against a front base wall of the air filter 9 and closes the front base wall itself (i.e. the front base wall of the air filter 9 can have its own closing device resting against the deflecting element 13, or the front base wall of the air filter 9 can be at least partially open and be closed by the deflecting element 13). In the embodiment shown in figure 4, the deflecting element 13 is entirely arranged inside the tubular housing 3 and, therefore, it does not project out of the intake opening 4 of the tubular housing 3; alternatively, a part (namely, the tip) of the deflecting element 13 can project out of the intake opening 4 of the tubular housing 3.

The deflecting element 13 has a conical shape and, as a consequence, as it gets closer to the air filter 9, the deflecting element 13 progressively increases the size (area) of its cross section; therefore, as it gets closer to the air filter 9, the deflecting element 13 progressively reduces the air passageway size (area) (namely, the annular free space delimited, on the inside, by the outer surface of the deflecting element 13 and, on the outside, by the lateral wall of the tubular housing 3, i.e. the space into which the air flows, which enters through the intake opening 4 of the tubular housing 3). The progressive reduction of the air passageway size (area) close to the air filter 9 determines an increase in the speed of the air (as the air flow rate necessarily is constant) with a consequent reduction of the pressure of the air (the so-called Venturi effect). In other words, the presence of the deflecting element 13 with a conical shape leads to an increase in the speed of the air taken in close to the air filter 9; this increase in the air speed is particularly positive, as it allows the air taken in to enter the air filter 9 (i.e. to flow through the filtering material of the air filter 9) in a more efficient manner, thus determining a significant increase in the flow rate of the air taken in, which flows through the air filter 9 towards the combustion chamber 11.

The separation wall 8 comprises a plurality of peripheral passageway through openings, which are obtained through the separation wall 8 and make up (as explained more in detail below) bypasses of the air filter 9 (i.e. alternative paths to be followed by the air so as to avoid flowing through the air filter 9 in order to get into the propulsion chamber 7), thus establishing a direct pneumatic communication between the intake chamber 6 and the propulsion chamber 7; according to figure 5, the peripheral passageway openings 14 are arranged around the central passageway opening 12, are separate from and independent of the central passageway opening 12, are separate from and independent of one another, and have the shape of a circular sector. In other words, the separation wall 8 comprises different passageway through openings 14, which are arranged on the outside of the air filter 9 in an annular area of the separation wall 8 extending from the lateral wall of the air filter 9 to the lateral wall of the tubular housing 3 and directly establish a pneumatic communication between the intake chamber 6 and the propulsion chamber 7 without going thorough the air filter 9.

According to figure 4, the central passageway opening 12 of the separation wall 8 is arranged in the area of the air filter 9, namely the central passageway opening 12 is completely covered by the air filter 9, so that the air flowing through the passageway opening 12 exclusively comes from the inside of the air filter 9. On the other hand, the peripheral passageway openings 14 are arranged on the outside of the air filter 9 and around the air filter 9 itself, so that the peripheral passageway openings 14 are not in any way covered by the air filter 9 and can receive air on the outside of the air filter 9.

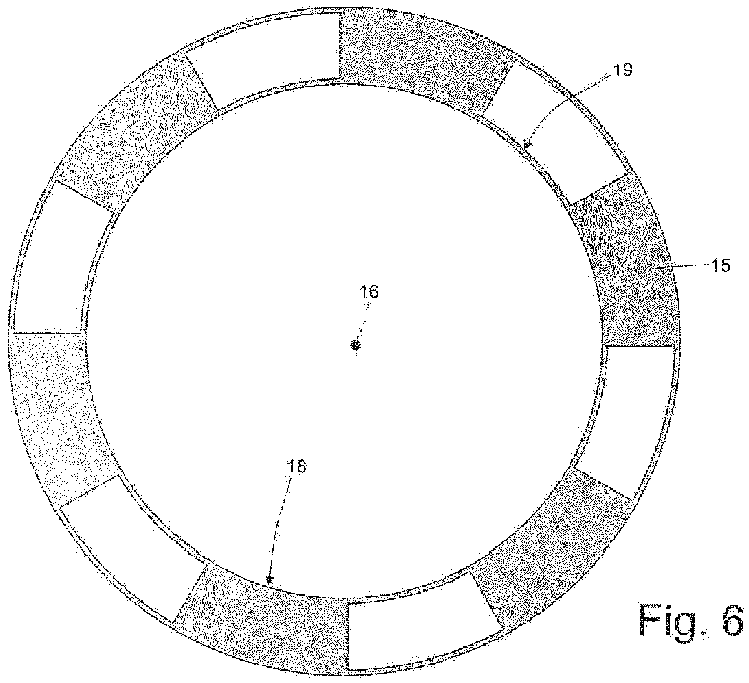

There is provided a shutter element 15 with an annular shape, which is coupled to the separation wall (i.e. it is arranged in front of or behind the separation wall 8 and in contact with the separation wall 8 itself) and is mounted so as to rotate around a central rotation axis 16 (which makes up the longitudinal symmetry axis of the air filter 9) thanks to the thrust of an electric motor 17. According to figure 6, the shutter element 15 comprises a central through hole 18, through which the air filter 9 is arranged, and a plurality of peripheral passageway through openings 19; the peripheral passageway openings 19 are arranged around the central hole 18, are separate from and independent of the central hole, are separate from and independent of one another, and have the shape of a circular sector.

According to figure 4, the peripheral passageway through openings 19 of the shutter element 15 are arranged so as to be circumferentially aligned with the peripheral passageway openings 14 of the separation wall 8, so that the rotation of the shutter element 15 around the rotation axis 16 can move the shutter element 15 to a closing position, in which the peripheral passageway openings 19 of the shutter element 15 are not aligned with (i.e. they do not overlap) the peripheral passageway openings 14 of the separation wall 8 and, therefore, the peripheral passageway openings 14 are closed (covered, plugged) by the shutter element 15, or to an opening position, in which the peripheral passageway openings 19 of the shutter element 15 are aligned with (i.e. they overlap) the peripheral passageway openings 14 of the separation wall 8 and, therefore, the peripheral passageway openings 14 are not closed by the shutter element 15.

When the shutter element 15 is in its closing position, the peripheral passageway openings 14 of the separation wall 8 are closed (covered) by the shutter element 15 (as they are not aligned with the peripheral passageway openings 19 of the shutter element 15) and, therefore, the air taken in, located in the propulsion chamber 7, necessarily flows through the air filter 9; hence, possible impurities present in the air are held back by the air filter 9, but, on the other hand, the passage through the air filter 9 determines, in the air taken in, a loss of load, which jeopardized the performances of the turbine engine 2. On the contrary, when the shutter element 15 is in its opening position, the peripheral passageway openings 14 of the separation wall 8 are free (as they are aligned with the peripheral passageway openings 19 of the shutter element 15) and, therefore, the air taken in, located in the propulsion chamber 7, mainly flows through the peripheral passageway openings 14 of the separation wall 8, thus bypassing the air filter 9; as a consequence, possible impurities present in the air are not held back by the air filter 9; therefore, there is no loss of load, but, on the other hand, possible impurities present in the air are not held back by the air filter 9.

According to figure 4, there is provided an electronic control unit 20, which controls the operation of the air filter 9 and, among other things, controls the electric motor 17 so as to have it move the shutter element 15 between the closing position and the opening position. In particular, when the helicopter 1 is close to the ground (during take-off or landing or when it stops at a low altitude), the air taken in can (likely) contain impurities and, therefore, the shutter element 15 is moved to and kept in the closing position by the electronic control unit 20, so as to filter the air taken in; on the other hand, when the helicopter 1 flies high (i.e. far from the ground, for example at an altitude of some dozens of metres), the air taken in very likely contains impurities and, therefore, the shutter element 15 is moved to and kept in the opening position by the electronic control unit 20, so as to avoid (uselessly) jeopardizing the performances of the turbine engine 2.

Furthermore, the electronic control unit 20 is connected to a pressure sensor 21, which is arranged downstream of the air filter 9 or inside the air filter 9 and measures the pressure of the air taken in after it has flown through the air filter 9; when the pressure of the air take in, measured by the pressure sensor 21, is below a threshold value, the shutter element 15 is moved to and kept in the opening position by the electronic control unit 20, regardless of the proximity of the helicopter 1 to the ground. In other words, the pressure of the air taken in, measured by the pressure sensor 21, indicates the clogging of the air filter 9, since the more the air filter 9 is clogged, the lower the pressure of the air taken in, measured by the pressure sensor 21, is; therefore, when the air filter 9 is too clogged, namely when the pressure of the air taken in, measured by the pressure sensor 21, is below a threshold value, the shutter element 15 is moved to and kept in the opening position by the electronic control unit 20, so as to avoid excessively jeopardizing the performances of the turbine engine 2.

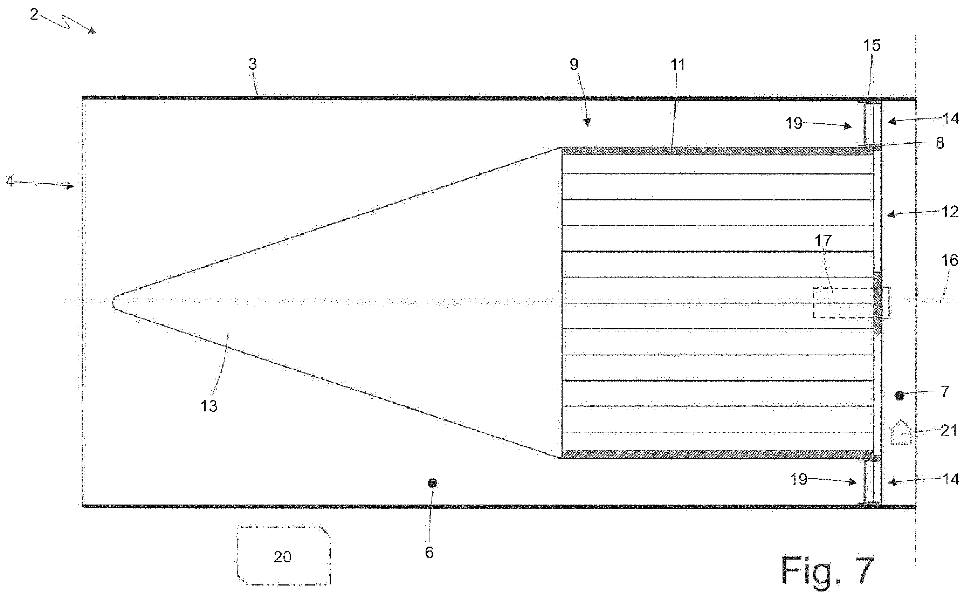

According to the embodiment shown in figure 7, the air filter 9 is not provided with the front filtering element 10 with the shape of a truncated cone and exclusively comprises the rear filtering element 11 with a cylindrical shape.

In the embodiment shown in the accompanying drawings, the separation wall 8 comprises a plurality of peripheral passageway openings 14, which are uniformly distributed along its extension; according to an alternative embodiment, which is not shown herein and is perfectly equivalent, the separation wall 8 comprises one single peripheral passageway opening 14 or a limited number of peripheral passageway openings 14 (for example, only two or three peripheral passageway openings 14).

In the embodiment shown in the accompanying drawings, the shutter element 15 consists of a rotary disc having the peripheral passageway openings 16 that can be aligned with (overlap) or not the corresponding peripheral passageway openings 14 of the separation wall 8. According to an alternative embodiment, which is not shown herein and is perfectly equivalent, the shutter element 15 can have a different shape; for example, each peripheral passageway opening 14 of the separation wall 8 can comprise its own shutter element 15, which is not provided with through holes. The important thing is that the shutter element 15 or the shutter elements 15 is or are capable of opening and closing the peripheral passageway openings 14 of the separation wall 8 (so as to allow or not to allow air to flow through the peripheral passageway openings 14 of the separation wall 8).

According to an alternative embodiment, which is not shown herein and is perfectly equivalent, there can be provided a central intake pipe, which connects the air filter 9 to the passageway opening 12 of the separation wall 8 and/or to the intake of the turbine of the turbine engine 2; in the same way, there can be provided lateral intake pipes, each connecting a peripheral passageway opening 14 of the separation wall 8 to the intake of the turbine of the turbine engine 2.

The embodiment shown by mere way of example in the accompanying drawings relates to a helicopter 1, but the invention can find advantageous application in any type of aircraft, hence also an airplane.

The engine 2 described above has numerous advantages.

First of all, the engine 2 described above allows the aircraft 1 to safely operate in areas with a lot of dust (hence, in areas where the air close to the ground is rich in impurities raised both by natural wind and by air currents generated by the movement of the aircraft 1) thanks to the presence of the air filter 9, which, when needed, is used to preventively filter the air taken in by the engine 2 moving the shutter element 15 to the closing position.

Furthermore, the engine 2 described above can operate, almost for the entire flight, without having its performances jeopardized, because, when the aircraft 1 flies high (i.e. relatively far from the ground), the shutter element 15 is moved to the opening position in order to bypass the air filter 9.

Finally, the engine 2 described above is easy and cheap to be manufactured, as the manufacturing and the movements of the shutter element 15 can be carried out in a simple manner and with components that are available in the market.

## Claims

1. An engine (2) of an aircraft (1); the engine (2) comprises:
a tubular housing (3) having a tubular lateral wall without openings and one single air intake opening (4), which is arranged at the front in the area of a front base perpendicular to the lateral wall and through which the engine (2) takes in the external air needed to operate;
at least one air filter (9), which has a tubular shape having a cylindrical symmetry, is completely arranged inside the tubular housing, and is narrower than the tubular housing (3), so that a lateral wall of the air filter (9) is at a given distance other than zero from the lateral wall of the tubular housing (3); and
a separation wall (8), which is completely arranged inside the tubular housing (3) in the area of an intermediate portion of the tubular housing (3), is oriented perpendicularly to the lateral wall of the tubular housing (3), provides a support for a base of the air filter (9), divides the inside of the tubular housing (3) into a front intake chamber (6) containing the air filter (9) and a rear propulsion chamber (7), and has a first passageway through opening (12), which establishes a pneumatic communication on the inside of the air filter (9) with the rear propulsion chamber (7);
the engine (2) is **characterized in that:**
the separation wall (8) comprises at least one second passageway through opening (14), which is arranged on the outside of the air filter (9) in an annular area of the separation wall (8) extending from the lateral wall of the air filter (9) to the lateral wall of the tubular housing (3) and directly establishes a pneumatic communication between the intake chamber (6) and the propulsion chamber (7) without going thorough the air filter (9);
at least one shutter element (15) is provided, which is mounted so as to be movable between an opening position, in which the shutter element (15) allows air to flow through the second passageway opening (12), and a closed position, in which the shutter element (15) prevents air from flowing through the second passageway opening (12); and
an actuator (17) is provided, which moves the shutter element (15) between the opening position and the closing position.

2. An engine (2) according to claim 1, wherein the shutter element (15) is mounted so as to rotate around a rotation axis (16).

3. An engine (2) according to claim 2, wherein the rotation axis (16) is longitudinal and makes up the longitudinal symmetry axis of the air filter (9) and of the tubular housing (3).

4. An engine (2) according to claim 2 or 3, wherein the shutter element (15) comprises at least one third passageway through opening (19), which overlaps the second passageway opening (12) in the opening position and does not overlap the second passageway opening (12) in the closing position.

5. An engine (2) according to any of the claims from 1 to 4, wherein the separation wall (8) comprises a plurality of second passageway openings (14), which are arranged around the first passageway opening (12) located at the centre, are separate from and independent of the first passageway opening (12) and are separate from and independent of one another.

6. An engine (2) according to any of the claims from 1 to 5, wherein the second passageway opening (12) is shaped like a circular sector.

7. An engine (2) according to any of the claims from 1 to 6, wherein the air filter (9) comprises a filtering element (11) with a cylindrical shape, in which the filtering material is arranged in correspondence to the lateral wall.

8. An engine (2) according to any of the claims from 1 to 6, wherein the air filter (9) comprises:
a front filtering element (10) with the shape of a truncated cone, in which the filtering material is arranged in correspondence to the lateral wall; and
a rear filtering element (11) with a cylindrical shape, in which the filtering material is arranged in correspondence to the lateral wall.

9. An engine (2) according to any of the claims from 1 to 8 and comprising a deflecting element (13) with a conical shape, which is completely housed inside the tubular housing (3) and is arranged in front of the air filter (9).

10. An engine (2) according to claim 9, wherein, as it gets closer to the air filter (9), the deflecting element (13) progressively reduces the air passageway area between an outer surface of the deflecting element (13) and the lateral wall of the tubular housing (3).

## Patentansprüche

1. Triebwerk (2) eines Flugzeugs (1); wobei das Triebwerk (2) umfasst:
ein rohrförmiges Gehäuse (3) mit einer rohrförmigen Seitenwand ohne Öffnungen und einer einzelnen Luftansaugöffnung (4), die vorne im Bereich einer vorderen Basis senkrecht zu der Seitenwand angeordnet ist und durch welche das Triebwerk (2) die für den Betrieb benötigte Außenluft ansaugt;
mindestens einen Luftfilter (9), der eine rohrförmige Form mit einer zylindrischen Symmetrie aufweist, vollständig innerhalb des rohrförmigen Gehäuses angeordnet ist und schmäler als das rohrförmige Gehäuse (3) ist, sodass sich eine Seitenwand des Luftfilters (9) in einem gegebenen Abstand ungleich null von der Seitenwand des rohrförmigen Gehäuses (3) befindet; und
eine Trennwand (8), die vollständig innerhalb des rohrförmigen Gehäuses (3) in dem Bereich eines Zwischenabschnitts des rohrförmigen Gehäuses (3) angeordnet ist, senkrecht zu der Seitenwand des rohrförmigen Gehäuses (3) ausgerichtet ist, eine Auflage für eine Basis des Luftfilters (9) bereitstellt, den Innenraum des rohrförmigen Gehäuses (3) in eine vordere Ansaugkammer (6), die den Luftfilter (9) enthält, und eine hintere Antriebskammer (7) unterteilt, und eine erste Durchgangsöffnung (12) aufweist, die eine pneumatische Kommunikation an der Innenseite des Luftfilters (9) mit der hinteren Antriebskammer (7) herstellt;
wobei das Triebwerk (2) **dadurch gekennzeichnet ist, dass:**
die Trennwand (8) mindestens eine zweite Durchgangsöffnung (14) umfasst, die an der Außenseite des Luftfilters (9) in einem ringförmigen Bereich der Trennwand (8) angeordnet ist, der sich von der Seitenwand des Luftfilters (9) zu der Seitenwand des rohrförmigen Gehäuses (3) erstreckt, und direkt eine pneumatische Kommunikation zwischen der Ansaugkammer (6) und der Antriebskammer (7) herstellt, ohne durch den Luftfilter (9) zu verlaufen;
mindestens ein Verschlusselement (15) bereitgestellt ist, das so angebracht ist, dass es zwischen einer Öffnungsposition, in der das Verschlusselement (15) zulässt, dass Luft durch die zweite Durchgangsöffnung (12) strömt, und einer geschlossenen Position, in der das Verschlusselement (15) verhindert, dass Luft durch die zweite Durchgangsöffnung (12) strömt, bewegbar ist; und
ein Betätigungselement (17) bereitgestellt ist, das das Verschlusselement (15) zwischen der Öffnungsposition und der Schließposition bewegt.

2. Triebwerk (2) nach Anspruch 1, wobei das Verschlusselement (15) so angebracht ist, dass es sich um eine Drehachse (16) dreht.

3. Triebwerk (2) nach Anspruch 2, wobei die Drehachse (16) längs verlaufend ist und die längs verlaufende Symmetrieachse des Luftfilters (9) und des rohrförmigen Gehäuses (3) darstellt.

4. Triebwerk (2) nach Anspruch 2 oder 3, wobei das Verschlusselement (15) mindestens eine dritte Durchgangsöffnung (19) umfasst, die die zweite Durchgangsöffnung (12) in der Öffnungsposition überlappt und die zweite Durchgangsöffnung (12) in der Schließposition nicht überlappt.

5. Triebwerk (2) nach einem der Ansprüche 1 bis 4, wobei die Trennwand (8) eine Vielzahl von zweiten Durchgangsöffnungen (14) umfasst, die rund um die erste Durchgangsöffnung (12), die sich in der Mitte befindet, angeordnet sind, getrennt und unabhängig von der ersten Durchgangsöffnung (12) sind und getrennt und unabhängig voneinander sind.

6. Triebwerk (2) nach einem der Ansprüche 1 bis 5, wobei die zweite Durchgangsöffnung (12) wie ein Kreisausschnitt geformt ist.

7. Triebwerk (2) nach einem der Ansprüche 1 bis 6, wobei der Luftfilter (9) ein Filterelement (11) mit einer zylindrischen Form umfasst, in dem das Filtermaterial entsprechend der Seitenwand angeordnet ist.

8. Triebwerk (2) nach einem der Ansprüche 1 bis 6, wobei der Luftfilter (9) umfasst:
ein vorderes Filterelement (10) mit der Form eines Kegelstumpfes, in dem das Filtermaterial entsprechend der Seitenwand angeordnet ist; und
ein hinteres Filterelement (11) mit einer zylindrischen Form, in dem das Filtermaterial entsprechend der Seitenwand angeordnet ist.

9. Triebwerk (2) nach einem der Ansprüche 1 bis 8 und umfassend ein Ablenkelement (13) mit einer konischen Form, das vollständig innerhalb des rohrförmigen Gehäuses (3) untergebracht und vor dem Luftfilter (9) angeordnet ist.

10. Triebwerk (2) nach Anspruch 9, wobei, mit seiner Annäherung an den Luftfilter (9), das Ablenkelement (13) den Luftdurchgangsbereich zwischen einer Außenfläche des Ablenkelements (13) und der Seitenwand des rohrförmigen Gehäuses (3) progressiv verringert.

## Revendications

1. Moteur (2) d'un aéronef (1) ; le moteur (2) comprend :
un carter tubulaire (3) ayant une paroi latérale tubulaire sans ouvertures et une seule ouverture d'admission d'air (4), qui est agencée à l'avant dans la zone d'une base avant perpendiculaire à la paroi latérale et à travers laquelle le moteur (2) prélève l'air externe nécessaire pour fonctionner ;
au moins un filtre à air (9), qui a une forme tubulaire ayant une symétrie cylindrique, est agencé totalement à l'intérieur du carter tubulaire, et est plus étroit que le carter tubulaire (3), de sorte qu'une paroi latérale du filtre à air (9) soit à une distance donnée autre que zéro de la paroi latérale du carter tubulaire (3) ; et
une paroi de séparation (8), qui est agencée totalement à l'intérieur du carter tubulaire (3) dans la zone d'une portion intermédiaire du carter tubulaire (3), est orientée perpendiculairement à la paroi latérale du carter tubulaire (3), fournit un support pour une base du filtre à air (9), divise l'intérieur du carter tubulaire (3) en une chambre d'admission avant (6) contenant le filtre à air (9) et une chambre de propulsion arrière (7), et a une première ouverture traversante de passage (12), qui établit une communication pneumatique sur l'intérieur du filtre à air (9) avec la chambre de propulsion arrière (7) ;
le moteur (2) est **caractérisé en ce que** :
la paroi de séparation (8) comprend au moins une deuxième ouverture traversante de passage (14), qui est agencée sur l'extérieur du filtre à air (9) dans une zone annulaire de la paroi de séparation (8) s'étendant de la paroi latérale du filtre à air (9) à la paroi latérale du carter tubulaire (3) et établit directement une communication pneumatique entre la chambre d'admission (6) et la chambre de propulsion (7) sans traverser le filtre à air (9) ;
au moins un élément de volet (15) est prévu, qui est monté de façon à être mobile entre une position d'ouverture, dans laquelle l'élément de volet (15) permet à l'air de s'écouler à travers la deuxième ouverture de passage (12), et une position fermée, dans laquelle l'élément de volet (15) empêche l'air de s'écouler à travers la deuxième ouverture de passage (12) ; et
un actionneur (17) est prévu, qui déplace l'élément de volet (15) entre la position d'ouverture et la position de fermeture.

2. Moteur (2) selon la revendication 1, dans lequel l'élément de volet (15) est monté de façon à tourner autour d'un axe de rotation (16).

3. Moteur (2) selon la revendication 2, dans lequel l'axe de rotation (16) est longitudinal et forme l'axe de symétrie longitudinal du filtre à air (9) et du carter tubulaire (3).

4. Moteur (2) selon la revendication 2 ou 3, dans lequel l'élément de volet (15) comprend au moins une troisième ouverture traversante de passage (19), qui chevauche la deuxième ouverture de passage (12) dans la position d'ouverture et ne chevauche pas la deuxième ouverture de passage (12) dans la position de fermeture.

5. Moteur (2) selon l'une quelconque des revendications 1 à 4, dans lequel la paroi de séparation (8) comprend une pluralité de deuxièmes ouvertures de passage (14), qui sont agencées autour de la première ouverture de passage (12) située au centre, sont séparées et indépendantes de la première ouverture de passage (12) et sont séparées et indépendantes les unes des autres.

6. Moteur (2) selon l'une quelconque des revendications 1 à 5, dans lequel la deuxième ouverture de passage (12) a la forme d'un secteur circulaire.

7. Moteur (2) selon l'une quelconque des revendications 1 à 6, dans lequel le filtre à air (9) comprend un élément de filtration (11) de forme cylindrique, dans lequel le matériau de filtration est agencé en correspondance avec la paroi latérale.

8. Moteur (2) selon l'une quelconque des revendications 1 à 6, dans lequel le filtre à air (9) comprend :
un élément de filtration avant (10) avec la forme d'un cône tronqué, dans lequel le matériau de filtration est agencé en correspondance avec la paroi latérale ; et
un élément de filtration arrière (11) de forme cylindrique, dans lequel le matériau de filtration est agencé en correspondance avec la paroi latérale.

9. Moteur (2) selon l'une quelconque des revendications 1 à 8 et comprenant un élément de déflexion (13) de forme conique, qui est logé totalement à l'intérieur du carter tubulaire (3) et est agencé à l'avant du filtre à air (9).

10. Moteur (2) selon la revendication 9, dans lequel, lorsqu'il se rapproche du filtre à air (9), l'élément de déflexion (13) réduit progressivement la zone de passage d'air entre une surface extérieure de l'élément de déflexion (13) et la paroi latérale du carter tubulaire (3).
